# EUROPÄISCHE PATENTSCHRIFT

(11) **EP 1 904 750 B1**
(45) Veröffentlichungstag und Bekanntmachung des Hinweises auf die Patenterteilung: **29.08.2012**
(21) Anmeldenummer: 06754644.0
(22) Anmeldetag: 30.06.2006
(51) Int. Cl.: F15B 13/043, H01F 7/18, G05D 16/20

(54) **ELEKTROHYDRAULISCHE STEUERUNGSVORRICHTUNG**
ELECTROHYDRAULIC CONTROL APPARATUS
DISPOSITIF DE COMMANDE ELECTROHYDRAULIQUE

(30) Priorität: 11.07.2005 DE 102005032588
(43) Veröffentlichungstag der Anmeldung: 02.04.2008
(73) Patentinhaber: Bosch Rexroth AG, 70184 Stuttgart (DE)
(72) Erfinder: RUSTLER, Joachim, 97816 Lohr am Main (DE); LATOUR, Christoph, 97753 Karlstadt (DE)
(86) Internationale Anmeldenummer: PCT/EP2006/006404
(87) Internationale Veröffentlichungsnummer: WO 2007/006436

(56) Entgegenhaltungen:
- EP-A- 0 872 645
- DE-A1- 19 614 866
- DE-A1- 19 625 348
- DE-A1- 19 813 913
- US-A- 5 647 387

## Beschreibung

Die Erfindung betrifft eine elektrohydraulische Steuervorrichtung, bei der ein hydraulisch betätigbares Stellglied von einem Druckreduzierventil angesteuert wird.

Die Ansteuerung des Stellglieds erfolgt über eine Steuerkette aus einer Steuerelektronik, die ein Sollsignal für einen Stellgrad des Stellgliedes erhält, einer Treiberschaltung, dem Druckreduzierventil und dem Stellglied. Das Stellglied kann ein Steuerschieber eines vorgesteuerten Wegeventils sein, das wiederum einen hydraulischen Verbraucher, z.B. einen Hydraulikzylinder oder einen Hydromotor, ansteuert. Ebenso kann es sich bei dem Stellglied um einen Stellkolben eines Hydromotors mit verstellbaren Schluckvolumen oder um den Stellkolben einer Verstellpumpe, z.B. einer Axialkolbenpumpe oder einer Flügelzellenpumpe, handeln. Solche Steuervorrichtungen kommen unter anderen in mobilen hydraulischen Arbeitsmaschinen, z.B. in Baufahrzeugen zum Einsatz. Eine elektrohydraulische Steuervorrichtung dieser Art ist z.B. in der Einleitung der DE 196 25 348 A1 beschrieben.

Bei schnellen Änderungen des Sollsignal tritt bei solchen Steuervorrichtungen innerhalb der Steuerkette ein Schleppfehler auf. Das bedeutet, das der tatsächliche Stellgrad dem Sollsignal mit einer zeitlichen Verzögerung folgt und gegebenenfalls, bei schnellen Signaländerungen, den vorgegebenen Sollwert auch nicht erreicht. Bei schnellen Sollwerthüben tritt aufgrund des Schleppfehlers eine scheinbare Hysterese auf. Der tatsächliche Stellgrad verläuft bei zunehmenden Sollsignal unterhalb des Sollwerts und bei abnehmenden Sollsignal oberhalb des Sollwerts. Diese dynamische Hysterese tritt umso ausgeprägter auf, je kürzer die Signalhubzeit des Sollsignals ist.

Aus der DE 198 13 913 A1 ist eine Kompensationsschaltung bekannt, die ein Ansteuersignal für ein proportional verstellbares Magnetventil so modifiziert, dass eine eisenkreisbedingte Hysterese des Magnetventils weitgehend ausgeglichen wird. Dazu wird ein Korrektursignal aus dem Zeitverlauf des Ansteuersignals unter besonderer Berücksichtigung von Umkehrpunkten berechnet.

Mit einer solchen Schaltung lässt sich eine statische Sollwertabweichung aufgrund einer magnetischen Hysterese kompensieren. Ein bei Sollwert-änderungen auftretender Schleppfehler in der Steuerkette wird jedoch nicht verringert. Der Schleppfehler kann zu deutlich größeren Abweichungen zwischen der Sollwertvorgabe und dem tatsächlichen Stellgrad führen als eine magnetisch bedingte Hysterese.

Bei vorgesteuerten Ventilen kann auch eine Positionsregelung der Hauptstufe vorgesehen sein. Einen solchen Aufbau zeigt die EP 0 872 645 A2. Die Vorsteuerventile sind als elektrisch angesteuerte Proportional-Wegeventile ausgeführt.

Einen elektrohydraulischen Druckregler für Kupplungen oder Bremsen zeigt die DE 196 14 866 A1. Der elektrohydraulische Druckregler besitzt einen Stromregelkreis für den Strom, mit dem ein Betätigungsmagnet des Druckreglers beaufschlagt wird. Ein Vorsteuerblock ist zusätzlich zu einem Reglerblock vorgesehen. Im Vorsteuerblock wird eine zeitliche Änderung des Soll-Signals des Stromregelkreises erfasst. Aufgrund der erfassten zeitlichen Änderung wird ein Vorsteuersignal generiert und dieses auf das Stellsignal des Reglerblocks aufaddiert, mit dem Ziel eine hohe Dynamik des Stromregelkreises zu erhalten.

In der US 5 647 387 A ist eine Ansteuerschaltung für Magnetventile offenbart. Diese besitzt eine Steuerschaltung und eine Treiberschaltung. Die Steuerschaltung stellt ein PWM Signal mit vorgegebenem Tastverhältnis und zwei Steuerausgänge zur Verfügung. Über einen Steuerausgang wird die Treiberschaltung zur Erzeugung eines Haltestroms, welcher dem vorgegebenem PWM Tastverhältnis entspricht, veranlasst. Über den anderen Steuerausgang kann die Treiberschaltung zur Erzeugung eines Anzugsstroms, welcher einem 100% Tastverhältnis entspricht, veranlasst werden. Der Anzugsstrom wird bei Einschaltvorgängen ausgegeben.

Die der vorliegenden Erfindung zugrunde liegende Aufgabe ist es demzufolge, eine hinsichtlich ihrer Ansteuerdynamik verbesserte elektrohydraulische Steuervorrichtung anzugeben, die insbesondere eine Verringerung des innerhalb der Steuerkette auftretenden Schleppfehlers erlaubt.

Diese Aufgabe wird erfindungsgemäß durch eine elektrohydraulische Steuervorrichtung mit den Merkmalen des Patentanspruchs 1 gelöst.

Die Besonderheit der vorliegenden Erfindung ist es, eine Korrekturschaltung vorzusehen, die das Sollsignal, welches den Stellgrad vorgibt, so modifiziert, dass ein Schleppfehler in einer Steuerkette verringert bzw. ausgeglichen wird. Auf diese Weise lässt sich das dynamische Verhalten des Stellglieds bzw. der Steuerkette deutlich verbessern. Die Modifikation des Sollsignals stellt eine einfache und effiziente Möglichkeit dar, die Genauigkeit und die Ansprechgeschwindigkeit des Stellglieds zu erhöhen. Eine Rückführung des tatsächlichen Stellgrads im Sinne einer Regelung ist innerhalb der Steuerkette nicht vorgesehen. Dadurch lässt sich die Steuerkette einfach und kostengünstig darstellen. Einschwingvorgänge oder Instabilitäten eines Regelvorgangs sind von vornherein ausgeschlossen. Sowohl bei einer Ansteuerung über manuelle Bedieninstrumente - wie z.B. einem Steuergeber - als auch bei Ansteuerung über eine automatische Steuereinrichtung - wie z.B. eine überlagerte Regelung - kann ein direktes, verzögerungsarmes Ansprechen des Stellglieds sichergestellt werden.

Durch das Korrektursignal wird eine zeitliche Änderung des Sollsignals verstärkt. Auf diese Weise können Reibungsverluste, Strömungswiderstände und eine bei Steuerölfluss von dem statischen Regeldruck abweichende Kennlinie des Druckreduzierventils kompensiert und das Ansprechverhalten des Stellglieds verbessert werden.

Es ist eine Differenziationschaltung vorhanden, mit der eine zeitliche Ableitung des Sollsignals gebildet wird. Das Korrektursignal wird in Abhängigkeit von dem Ableitungssignal und einem vorgegebenen Parameter gebildet. Ein solcher Parameter steht mit den Kenndaten des Druckreduzierventils und dem Stellglied in Zusammenhang. In den Parameter kann z.B. die Abweichung zwischen dem statischen Regeldruck und einer Durchfluss-Druck-Kennlinie des Druckreduzierventils eingehen. Ein weiterer Faktor ist die vom Steuerdruck beaufschlagte Kolbenfläche des Stellglieds. Diese Kolbenfläche ist ein Maß für die bei einer Stellgradänderung zu fördernde oder abzuführende Steuerölmenge. Die zeitliche Ableitung zeigt die zeitliche Änderung des Sollsignals sehr genau an. Sie ist in einer Steuerelektronik oder einem Microcontroller leicht implementierbar.

Weitere vorteilhafte Ausgestaltungen sind in den Unteransprüchen angegeben.

Eine besonders einfache Ausgestaltung sieht vor, das Ableitungssignal mit einem vorgegebenen Faktor zu multiplizieren. Vorzugsweise ist jeweils ein Signalweg für positive Werte des Ableitungssignals und für negative Werte des Ableitungssignals vorhanden. Auf den beiden Signalwegen werden die Werte des Ableitungssignals mit jeweils einem eigenen vorgegebenen Faktor multipliziert. Die Multiplikationsfaktoren haben die Funktion des zuvor erwähnten Parameters. So lässt sich durch Einstellen und Optimieren weniger Multiplikationsfaktoren die Steuerkette hinsichtlich des dynamischen Schleppfehlers kompensieren. Eine dynamische (Schein-)Hysterese tritt demzufolge erst bei sehr schnellen Signalhüben auf.

Gemäß einer weiteren Ausgestaltung wird das Ableitungssignal auf einem weiteren - zu den zuvor erwähnten Signalwegen parallelen - Signalweg einer Vorzeichenfunktion und einer Multiplikation mit einem weiteren Faktor unterworfen. Auf diese Weise lassen sich eine Haftreibung des Stellglieds bzw. eine Magnethysterese des Druckreduzierventils ausgleichen. Es können alternativ auch komplexere Simulationsmodule eingesetzt werden, mit denen sich Reibungseffekte oder eine Magnethysterese der Druckreduzierventile zumindest näherungsweise berechnen lassen. Auf der Grundlage dieser' Berechnungen lassen sich entsprechende Korrekturbeiträge ermitteln.

Eine bevorzugte Weiterbildung sieht vor, zusätzlich zu dem Ableitungssignal auch das Sollsignal bei der Bildung des Korrektursignals zu berücksichtigen. So lässt sich eine noch bessere Verringerung eines Schleppfehlers erzielen. Insbesondere kann eine genauere Berücksichtigung der Durchfluss-Druck-Kennlinie des Druckreduzierventils erfolgen. Vorzugsweise ist diese Weiterbildung durch ein Kennfeldglied realisiert, aus dem für vorgegebene Werte des Sollsignals und des Ableitungssignals vorgegebene Korrektursignalwerte auslesbar sind.

Die Multiplikationsfaktoren bzw. die Kennfeldeinträge sind vorzugsweise von den Kenngrößen des Druckreduzierventils und des Stellgliedes abhängig. Insbesondere sind die Multiplikationsfaktoren bzw. Kennfeldwerte von der Durchfluss-Druck-Kennlinie des Druckreduzierventils und der mit Steuerdruck beaufschlagten Kolbenfläche des Stellglieds abhängig. Eine größere Kolbenfläche kann durch größere Multiplikationsfaktoren bzw. Kennfeldwerte kompensiert werden. Damit steigt auch der Beitrag des Korrektursignals an dem modifizierten Sollsignal. Eine steilere Durchfluss-Druck-Kennlinie des Druckreduzierventils, die die Abweichung vom statischen Regeldruck angibt, kann ebenfalls durch höhere Multiplikationsfaktoren bzw. Kennfeldwerte kompensiert werden.

Falls das Druckreduzierventil innerhalb der Steuerkette einen unterlagerten P-Regelkreis darstellt, kann durch eine Verstärkung der zeitlichen Änderung des Sollsignals eine einfache und wirkungsvolle Verbesserung des Dynamikverhaltens der Steuerkette erzielt werden.

Bei dem Stellglied kann es sich z.B. um den Schieber eines hydraulischen Wegeventils, den Stellkolben einer Verstellpumpe oder den Stellkolben eines Hydromotors mit verstellbaren Schluckvolumen handeln.

Gemäß einer bevorzugten Weiterbildung der vorliegenden Erfindung, vorteilhaft anwendbar wenn das Stellglied ein Wegeventil ist, weist die Korrekturschaltung einen weiteren, fünften Signalweg auf, auf dem das Sollsignal durch eine Begrenzerschaltung auf Signalamplituden, die einer Betätigung des Wegeventils innerhalb eines Überdeckungsbereichs entsprechen, begrenzt wird. Das so begrenzte Sollsignal wird nacheinander einem Verzögerungsglied - z.B. einem PT1-Glied -, einer zweiten Differenziationsschaltung und einer Multiplikationsschaltung zugeführt. Auf diese Weise werden alle Änderungen des Sollsignals, die sich auf den Überdeckungsbereich des Schiebers des Wegeventils beziehen, zusätzlich verstärkt. Somit verbessert sich die Ansprechgeschwindigkeit der elektrohydraulischen Steuerung insbesondere bei einer Auslenkung aus der Ruhestellung oder bei einem Richtungswechsel des an das Wegeventil angeschlossenen Verbrauchers, da die Überdeckung des Wegeventils schneller überwunden wird. Das Verzögerungsglied sorgt dafür, dass das durch die zweite Differenziationsschaltung gebildete, zusätzliche Korrektursignal eine bestimmte, zur effizienten Ansteuerung des Druckreduzierventils geeignete Dauer und Signalamplitude aufweist. Insbesondere werden Signalspitzen vermieden.

Gemäß einer besonders bevorzugten Ausgestaltung der vorliegenden Erfindung weist die Steuerelektronik eine Pulsansteuerschaltung auf, der das Sollsignal oder das modifizierte Sollsignal zugeführt ist. Bei einem Wechsel des Sollsignals von einer ersten Amplitude, die einer unbetätigten Ruhestellung des Druckreduzierventils entspricht, zu einer anderen, zweiten Amplitude, die einer Betätigungsstellung des Druckreduzierventils entspricht, erzeugt die Pulsansteuerschaltung einen Ansteuerimpuls zur schnellen Überwindung eines Überdeckungsbereiches des Wegeventils und modifiziert das Sollsignal oder das modifizierte Sollsignal durch Aufschalten des Ansteuerimpulses. Die Tatsache, dass sich das Druckreduzierventil in Folge des Sollsignals in einer Ruhestellung befindet, bedeutet, dass der Schieber des Wegeventils entweder selbst in der Ruhestellung ist, gerade dorthin zurückläuft oder durch das Sollsignal in eine Richtung ausgelenkt ist, die durch Betätigung eines anderen Druckreduzierventils angesteuert wird. In all diesen Fällen bewirkt das Aufschalten des Ansteuerimpulses eine Verkürzung der Zeit, die sich der Wegeventilschieber im Überdeckungsbereich befindet. Auf diese Weise wird das Ansprechverhalten der elektrohydraulischen Steuerung verbessert.

Vorzugsweise wird der Ansteuerimpuls durch den Ausgang eines Verzögerungsglieds, z.B. ein PT1-Glied, vorgegeben. Das Verzögerungsglied kann aber auch eine andere Zeitcharakteristik als das PT1-Verhalten aufweisen. Dies kann z.B. ein lineare Charakteristik sein.

Gemäß einer bevorzugten Weiterbildung ist ein erstes Schaltelement vorgesehen, dass dem Verzögerungsglied eine vorgegebene maximale Pulsamplitude zuführt während das Sollsignal einen Signalpegel Null aufweist, d.h. während das Sollwertsignal eine Ruhestellung des Druckreduzierventils vorgibt. Ein zweites Schaltelement gibt den Ausgang des Verzögerungsglieds frei, wenn das Sollsignal auf einen von Null verschiedenen Wert wechselt. Dadurch wird bei einem Amplitudenwechsel des Sollsignals von Null auf einen von Null verschiedenen Wert ein Ansteuerimpuls generiert. Die Amplitude des Ansteuerimpulses nimmt durch asymptotische Annäherung an die maximale Pulsamplitude zu, je länger das Sollsignal den Wert Null hat. Dadurch kann ein verzögerter Rücklauf des Wegeventilschiebers in die Ruhestellung berücksichtigt werden. Bei kurzen Ansteuerpausen, in denen der Wegeventilschieber nicht in die Ruhestellung zurückkehrt, wird ein entsprechend geringerer Ansteuerpuls erzeugt. Das Zeitverhalten des Ansteuerimpulses ist durch das Verzögerungsglied vorgegeben. Ein PT1-Verhalten eignet sich hier besonders gut, da der Rücklauf des Wegeventilschiebers ein ähnliches Zeitverhalten aufweist.

Alternativ kann der Ansteuerimpuls auch auf Basis einer berechneten Position des Wegeventilschiebers erzeugt werden. Die Positionsberechnung erfolgt in diesem Fall aus dem zeitlichen Verlauf des Sollsignals mittels eines Modells, welches das Verhalten der hydraulischen Komponenten, dem Wegeventil und dem Druckreduzierventil, nachbildet.

Vorzugsweise sind der Ansteuerimpuls und das Sollsignal bzw. der Ansteuerimpuls und das modifizierte Sollsignal einer Maximalwertschaltung zugeführt. Am Ausgang der Maximalwertschaltung geht die Signalkurve des Ansteuerimpulses unterbrechungsfrei in die Signalkurve des Sollsignals über, wenn der Ansteuerimpuls abklingt.

Nachfolgend werden die vorliegende Erfindung und deren Vorteile unter Bezugnahme auf das in den Figuren dargestellte Ausführungsbeispiel näher erläutert.

Es zeigen:
- Fig. 1: eine elektrohydraulische Steuerungsvorrichtung mit einem Stellglied und einer Steuerelektronik, die eine Schaltung zur Modifikation des für das Stellglied maßgeblichen Sollsignals umfasst,
- Fig. 2: eine Steuerelektronik mit einer weiteren Korrekturschaltung zur Modifikation des Sollsignals,
- Fig. 3: eine Durchfluss-Druck-Kennlinie eines handelsüblichen Druckreduzierventils,
- Fig. 4: einen zeitlichen Signalverlauf für ein Sollwertsignal und den daraus resultierenden Magnetstrom, Vorsteuerdruck und Stellgrad eines Stellglieds für eine Steuerungsvorrichtung ohne Schleppfehlerkompensation,
- Fig. 5: einen zeitlichen Signalverlauf für ein Sollwertsignal und den daraus resultierenden Magnetstrom, Vorsteuerdruck und Stellgrad eines Stellglieds für eine Steuerungsvorrichtung mit der erfindungsgemäßen Schleppfehlerkompensation nach Figur 1, 2 oder 6,
- Fig. 6: eine Steuerelektronik zur Ansteuerung eines Paares Druckreduzierventile mit jeweils einer zusätzlichen Impulsansteuerschaltung und
- Fig. 7a: einen zeitlichen Signalverlauf eines der Impulsansteuerschaltung zugeführten Sollsignals,
- Fig. 7b: eines Ausgangssignals des PT1-Verzögerungsglieds und
- Fig. 7c: eines am Ausgang der Impulsansteuerschaltung anliegenden Signals mit aufgeschalteten Ansteuerimpuls.

Anhand dieser Figuren folgt nun die detaillierte Beschreibung des Ausführungsbeispiels.

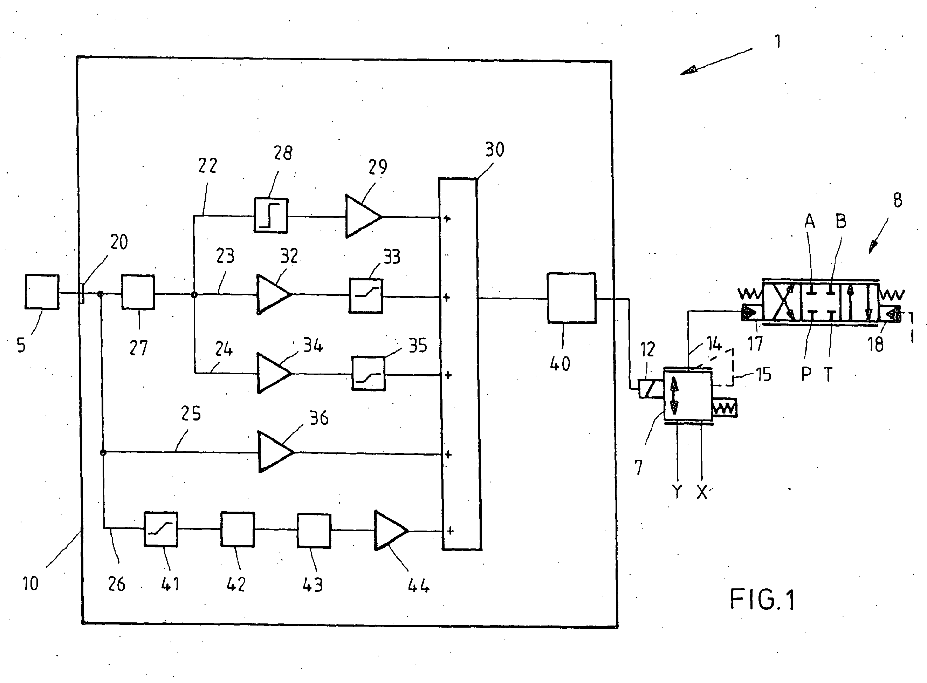

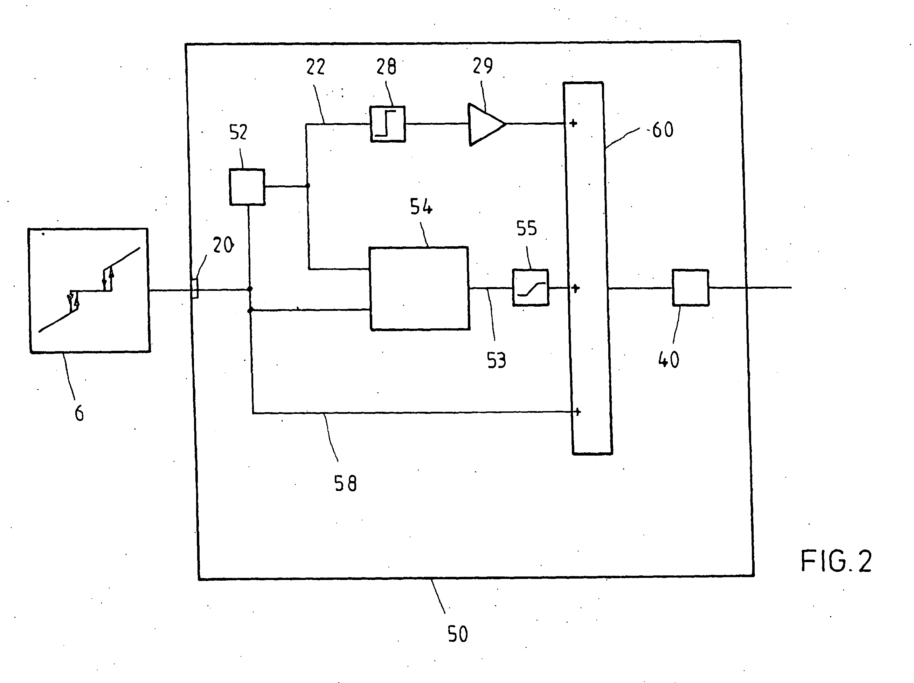

In Figur 1 ist eine elektrohydraulische Steuerungsvorrichtung 1 dargestellt. Diese umfasst eine Einrichtung 5 zur Vorgabe eines Sollwerts, eine Steuerelektronik 10, ein von der Steuerelektronik 10 elektrisch angesteuertes 3-Wege-Druckreduzierventil 7 und ein proportional betätigbares Wegeventil 8 als Stellglied der elektrohydraulischen Steuerungsvorrichtung 1. Bei der Sollwertvorgabeeinrichtung 5 handelt es sich um einen manuellen Sollwertgeber. Alternativ kann ein Sollwert aus einer numerischen Steuerung oder einer überlagerten Regelschleife vorgegeben werden. Der Sollwert gibt den Stellgrad des Stellgliedes 8 vor. Für einen manuellen Sollwertgeber 6 ist die Ansprechcharakteristik in Figur 2 andeutungsweise angegeben. Ab einer bestimmten Auslenkung springt der ausgegebene Sollwert auf einen der Auslenkung entsprechenden Wert. Dieser Wert ist so gewählt, dass ein Überdeckungsbereich des Wegeventils 8 übersprungen wird. Eine Hysterese am Ansprechpunkt verhindert, dass das Sollwertsignal ungewollt hin und her springt.

Das Druckreduzierventil 7 wird über einen Elektromagneten 12 betätigt. Der Elektromagnet 12 wird von der Steuerelektronik 10 über eine Verbindungsleitung mit Strom beaufschlagt. Das Druckreduzierventil 7 ist an eine Steuerdruckversorgung X und eine Druckmittelrückführleitung Y angeschlossen. Es erzeugt in Abhängigkeit von der magnetischen Betätigung an seinem Ausgang 14 einen Steuerdruck. Der Steuerdruck am Ausgang 14 ist über die interne Druckleitung 15 an den Regelkolben des Druckreduzierventils 7 geführt.

Somit regelt das Druckreduzierventil 7 den Steuerdruck an seinem Ausgang 14 auf einen durch die Magnetbetätigung vorgegebenen Wert.

Der Ausgang 14 des Druckreduzierventils 7 ist im Sinne einer hydraulischen Vorsteuerung mit einer Steuerkammer 17 des Proportionalventils 8 fluidisch verbunden. Über den am Ausgang 14 bereitstehenden Steuerdruck erfolgt eine hydraulische Betätigung des Kolbens des Proportionalventils 8. Somit werden Druckmittelverbindungen zwischen den Ausgängen A und B und einem Pumpenanschluss P und einem Tankanschluss T des Proportionalventils 8 gesteuert. Das Proportionalventil 8 besitzt eine weitere Steuerkammer 18, die der Steuerkammer 17 gegenüberliegend angeordnet ist. Die Druckbeaufschlagung der Steuerkammer 18 erfolgt auf die gleiche Weise wie die Druckbeaufschlagung der Steuerkammer 17 durch ein weiteres Druckreduzierventil und ggf. eine Steuerelektronik, die aus Gründen der Übersichtlichkeit in Fig. 1 nicht dargestellt sind.

Die Steuerelektronik 10 besitzt eine Eingangsschnittstelle 20, an der ihr das Sollwertsignal zugeführt ist. Das Sollwertsignal ist innerhalb der Steuerelektronik verschiedenen Signalpfaden 22, 23, 24, 25 und 26 zugeführt. Ein erster Signalpfad 22 verläuft über ein Differenziationsglied 27, über eine Vorzeichenfunktionsglied 28 und ein Multiplikationsglied 29 zu einem Addierglied 30. Ein zweiter Signalpfad 23 verläuft über das Differenziationsglied 27, ein Multiplikationsglied 32 und ein Signalbegrenzungsglied 33 zum Addierglied 30. Ein dritter Signalpfad 24 schließt das Differenziationsglied 27, ein Multiplikationsglied 34, ein weiteres Signalbegrenzungsglied 35 und das Addierglied 30 ein. Ein vierter Signalpfad 25 verläuft von der Eingangsschnittstelle 20 über ein Multiplikationsglied 36 zum Addierglied 30. Ein fünfter Signalpfad 26 verläuft schließlich über das Signalbegrenzungsglied 41, ein PT1-Glied 42, das Differenziationsglied 43 und das Multiplikationsglied 44 zum Addierglied 30. Im Addierglied 30 werden die Signale der fünf Signalpfade addiert. Das resultierende Signal ist einer Treiberschaltung 40 zugeführt, die einen Ansteuerstrom für den Elektromagneten 12 erzeugt.

Auf dem vierten Signalweg 25 wird das Sollsignal dem Addierglied 30 im Wesentlichen unverändert zugeführt. Das Multiplikationsglied 36 sorgt für eine durch seinen Multiplikationsfaktor festgelegte Gewichtung des Sollsignals in der Addition. Auf den Signalwegen 22, 23, 24 und 26 werden Anteile eines Korrektursignals erzeugt und im Addierglied 30 zu dem auf dem vierten Signalweg 25 geführten Sollsignal addiert. Die Korrektursignalanteile beruhen unter anderem auf einer im Differenziationsglied 27 erzeugten, zeitlichen Ableitung des Sollsignals.

Das vom Differenziationsglied 27 ausgegebene Ableitungssignal wird auf dem ersten Signalpfad 22 einer Vorzeichenfunktion unterworfen. Daraus ergibt sich ein konstanter, von der Steigungsrichtung des Sollsignals abhängiger, erster Korrektursignalanteil. Der Betrag des ersten Korrekturanteils ist durch den Multiplikationsfaktor des Multiplikationsglieds 29 festgelegt. Durch den ersten Korrekturanteil lässt sich eine im Stellglied auftretende Haftreibung oder eine magnetische Hysterese des Elektromagnets 12 bei der Betätigung des Druckreduzierventils 7 ausgleichen.

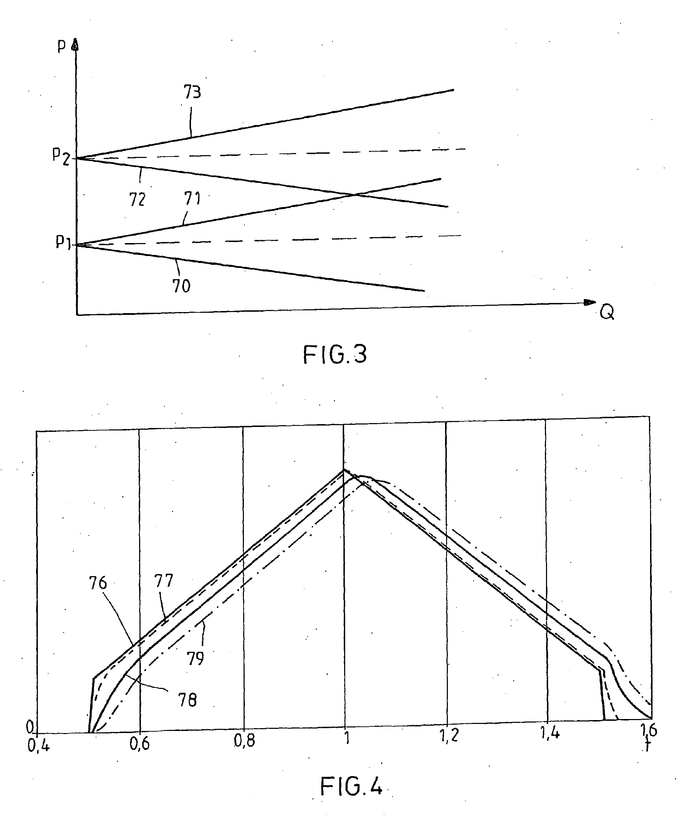

Auf dem zweiten und dritten Signalpfad 23 und 24 wird das Ableitungssignal jeweils um einem vorgegebenen, ggf. unterschiedlichen Faktor verstärkt und einem Signalbegrenzungsglied 33 bzw. 35 zugeführt. Das Signalbegrenzungsglied 33 ist so eingestellt, dass es nur positive Signalanteile überträgt. Das Signalbegrenzungsglied 35 überträgt dagegen nur negative Signalanteile. Die Signalbegrenzungsglieder 33 und 35 begrenzen zudem den Betrag des ihnen zugeführten Signals auf Werte, die den Aussteuerbereich der Treiberschaltung 40 nicht übersteigen. Die Signalpfade 23 und 24 erzeugen damit einen Korrektursignalanteil zur Kompensation eines Schleppfehlers, der in der Steuerkette von der Sollwertvorgabeeinrichtung 5 bis zum Stellglied 8 vor allem durch das Verhalten des Druckreduzierventils 7 - wie anhand von Fig. 3 beschrieben - und durch die hydraulische Ansteuerung des Stellglieds 8 bedingt ist. Falls die Multiplikationsfaktoren der Multiplikationsglieder 32 und 34 gleich sind, können die Signalpfade 23 und 24 auch in einen einzigen Signalpfad zusammengefasst werden. Darin wäre ein Signalbegrenzungsglied anzuordnen, dass den Betrag der negativen und positiven Signalanteile auf sinnvolle, für die Treiberschaltung 40 zulässige Werte begrenzt.

Ein weiterer fünfter Signalpfad 26 führt das Sollsignal dem Signalbegrenzungsglied 41 zu. Darin wird das Sollsignal auf 20% seines Wertebereichs begrenzt. Dies entspricht etwa 2/3 eines Signalhubs, der zum Übersteuern einer Überdeckung des Wegeventils 8 nötig ist. Das so begrenzte Signal wird durch das PT1-Glied 42 verzögert und im Differenziationsglied 43 einer zeitlichen Ableitung unterworfen. Mit dem Multiplikationsglied 44 wird der Anteil diese Signals in der Gesamtsignalsumme festgelegt. Auf diese Weise werden zeitliche Änderungen des Sollsignals, die eine Bewegung des Ventilschiebers bzw. Ventilkolbens des Wegeventils 8 im Überdeckungsbereich bewirken, verstärkt. Verläuft das Sollsignal durch den Überdeckungsbereich, wird auf dem fünften Signalpfad 26 somit ein zusätzlicher Ansteuerimpuls erzeugt, der ein Überwinden des Überdeckungsbereiches durch den Regelkolben beschleunigt. Das PT1-Glied 42 vermindert durch seine Tiefpasseigenschaften in dem nachgeschalteten Differenziationsglied 43 das Entstehen von sehr kurzen, hohen Signalspitzen, denen das Druckreduzierventils 7 nicht folgen kann, und sorgt für eine Verlängerung eines auf diesem Signalpfad erzeugten Ansteuerimpulses.

Um ein Druckreduzierventil, das an die Steuerdruckkammer 18 angeschlossen ist, anzusteuern, kann eine eigene Steuerelektronik, vergleichbar der Steuerelektronik 10, vorhanden sein. Dadurch lässt sich die jeweilige Steuerelektronik optimal an das entsprechende Druckreduzierventil anpassen. Alternativ kann das vom Addierglied 30 ausgegebene Signal in seine positiven und negativen Anteile aufgespaltet werden. Die positiven Signalanteile werden der Treiberschaltung 40 für das Druckreduzierventil 7 zugeführt. Die negativen Signalanteile werden einer weiteren Treiberschaltung für das andere Druckreduzierventil, das die Steuerkammer 18 versorgt, zugeführt. Dadurch lässt sich eine besonders einfache, kostengünstige Steuerelektronik angeben.

In der Figur 3 ist eine Durchfluss-Druck-Kennlinie eines typischen 3-Wege-Druckreduzierventils 7 dargestellt. Bei einer bestimmten elektrischen Stromstärke, die dem Elektromagnet 12 zugeführt ist, stellt sich ein zugehöriger statischer Druck P1 am Ausgang 14 des Druckreduzierventils ein. Der Druck verringert sich jedoch, sobald Druckmittel am Ausgang 14 abfließt. Die Druckverringerung wird mit zunehmenden Volumenstrom ausgeprägter. Dieser Sachverhalt ist durch die Kennlinie 70 dargestellt. Wird dem Ausgang 14 Druckmittel zugeführt, so steigt der anstehende Druck bei konstanter Bestromung des Elektromagneten 12, wie die Kennlinie 71 verdeutlicht. Bei einem höheren elektrischen Ansteuerstrom stellt sich im statischen Fall ein höherer Druck P2 ein. Auch hier ist jedoch bei einem Abfluss von Druckmittel eine Druckerniedrigung gemäß der Kennlinie 72 und bei einem Zufluss von Druckmittel am Ausgang 14 eine Druckerhöhung gemäß der Kennlinie 73 zu beobachten.

Die beschriebene Eigenschaft des Druckreduzierventils führt zu einem Schleppfehler, da der durch die elektrische Ansteuerung vorgegeben Druck bei Sollsignaländerungen zunächst nicht erreicht wird. Dies ist dadurch begründet, dass eine Stellgradänderung des Stellgliedes immer einen Zufluss oder Abfluss von Druckmittel aus der Steuerkammer 17 bzw. 18 bedingt. Zudem entstehen durch die Verrohrungsquerschnitte und Drosselstellen, z.B. an Verbindungskanälen, weitere dynamische Verluste, die den Schleppfehler vergrößern.

In Figur 4 sind zeitliche Verläufe eines Sollsignals 76 (durchgezogen), eines elektrischen Ansteuerstroms 77 (punktiert) für den Elektromagneten 12, den vom Druckreduzierventil 7 erzeugten Steuerdruck 78 (durchgezogen) und die tatsächliche Auslenkung 79 (strichpunktiert) des Ventilkolbens - als Stellgrad des Wegeventils 8 - für den Fall gezeigt, dass keine Kompensation erfolgt. Dadurch lässt sich der Schleppfehler veranschaulichen. Schon der Ansteuerstrom 77 folgt dem Sollsignal 76 mit einer geringen, unter anderen durch die Induktivität des Elektromagneten 12 bedingten Verzögerung. Es ist ersichtlich, dass der Steuerdruck 78 dem Sollsignal 76 mit deutlicher Verzögerung folgt. Mit weiterer, durch Strömungsverluste und die Notwendigkeit der Verdrängung von Druckmittel aus der sich verkleinernden Steuerkammer 18 bedingten Verzögerung folgt die Ventilkolbenposition 79 dem Steuerdrucksignal 78.

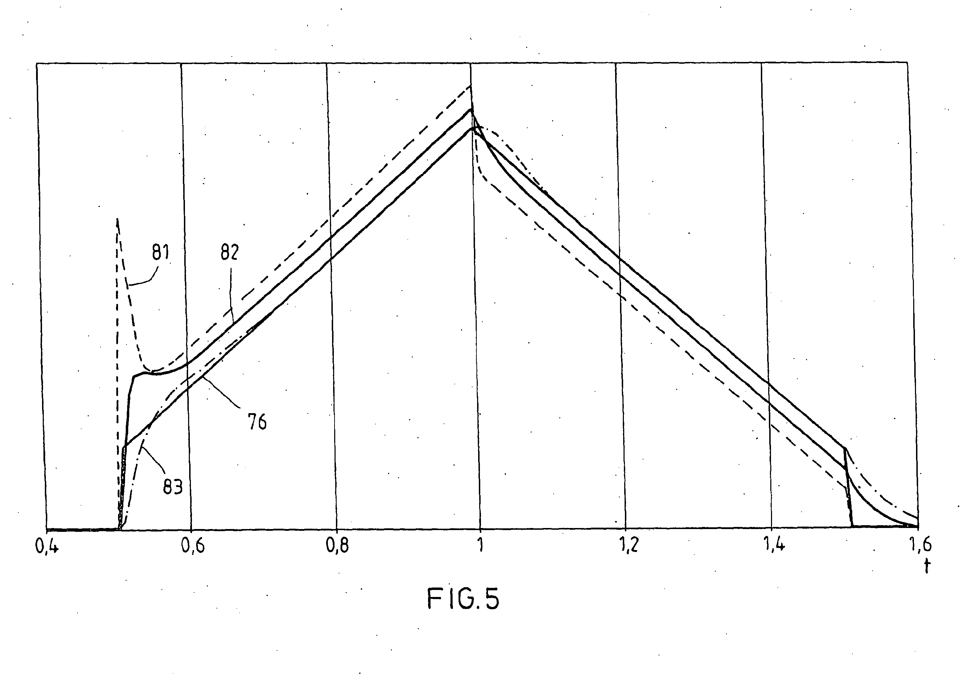

Ein solcher Schleppfehler innerhalb der Steuerkette lässt sich durch die gemäß der vorliegenden Erfindung vorgeschlagenen Kompensationsmaßnahmen wirkungsvoll reduzieren. Die Figur 5 zeigt die zeitlichen Verläufe des Sollsignals 76 (durchgezogen), das dem in Figur 4 gezeigten entspricht, des elektrischen Ansteuerstroms 81 (punktiert) für den Elektromagneten 12, des Steuerdrucks 82 (durchgezogen) und der Ventilkolbenposition 83 (strichpunktiert). Der Ansteuerstrom 81 ist gegenüber dem Sollsignal 76 mit den durch die Signalpfade 22, 23, 24 und 26 erzeugten Korrektursignalanteilen modifiziert. Bei ansteigendem Sollsignal 76 ist der Ansteuerstrom 81 gegenüber der Sollsignalvorgabe 76 deutlich erhöht. Insbesondere das Überspringen des Überdeckungsbereichs wird durch den zusätzlichen Ansteuerimpuls, der auf dem fünften Signalpfad 26 generiert wird, deutlich beschleunigt. Dieser führt zu einem sprunghaften Anstieg des Ansteuerstroms 81 bei Einsetzen des Sollsignals zu der Zeit t=0,5s. Bei fallenden Sollsignal 76 verläuft der Ansteuerstrom 81 unterhalb dem durch das Sollsignal 76 vorgegebenen Wert. Infolgedessen nimmt auch der Steuerdruck 82 einen höheren bzw. niedrigeren Druck, als durch das Sollsignal 76 vorgegeben, an. Dies hat zur Folge, dass die Ventilkolbenposition 83 schnell die Vorgabeposition erreicht und dem Sollsignal 76 nahezu verzögerungsfrei folgt.

Die Figur 2 zeigt eine weitere Möglichkeit für die Implementierung einer Steuerelektronik 50 für die erfindungsgemäße Kompensation eines Schleppfehlers in der Steuerkette zwischen einer Sollwertvorgabeeinrichtung 6 und dem Stellglied 8. Den Bestandteilen der Steuerelektronik 50, die den in Figur 1 gezeigten Bestandteilen entsprechen, ist das gleiche Bezugszeichen zugeordnet.

Der Steuerelektronik 50 ist an einer Eingangsschnittstelle 20 das Sollsignal zugeführt. Über einen Signalpfad 58 gelangt das Sollsignal an ein Addierglied 60. Ein Korrektursignal wird über die Signalpfade 22 und 53 gebildet. Das Korrektursignal wird unter Verwendung einer Zeitableitung des Sollsignals erzeugt. Das Ableitungssignal wird durch das Differenziationsglied 52 aus dem Sollsignal generiert. Der Signalpfad 22 ist in Bezug auf Figur 1 schon beschrieben worden. Auf dem Signalpfad 53 wird einem Kennfeldglied 54 das Ableitungssignal und das Sollsignal zugeführt. In dem Kennfeldglied 54 sind für vorgegebene Werte des Sollsignals und des Ableitungssignals vorgegebene Korrektursignalwerte abgelegt. Aufgrund des anliegenden Sollsignals und des anliegenden Ableitungssignals erzeugt das Kennfeldglied 54, unter anderem durch Interpolation, einen Korrektursignalwert an seinem Ausgang. Der Korrektursignalwert durchläuft ein Signalbegrenzungsglied 55 und wird im Addierglied 60 dem Sollsignal zuaddiert. Das Signalbegrenzungsglied 55 begrenzt die Korrektursignalamplitude auf Werte, die die Treiberschaltung 40 in einen Magnetstrom umsetzen kann.

Die in der Figur 1 gezeigte Steuerelektronik 10 ist durch die Vorgabe von Multiplikationsfaktoren der Multiplikationsglieder 29, 32, 34, 36 und 44 an die verwendeten Druckreduzierventile und das verwendete Stellglied angepasst. Die Anpassung hat das Ziel den zeitlichen Verlauf des Sollsignals 76 in möglichst gute Übereinstimmung mit dem Betätigungsgrad 83 des Stellgliedes 8 zu bringen.

Über den Multiplikationsfaktor des Multiplikationsglieds 29 wird der Korrekturanteil hinsichtlich einer Magnethysterese des Druckreduzierventils 7 und einer Reibung im Druckreduzierventil 7 und dem Proportionalventil 8 eingestellt. Die Multiplikationsglieder 32 und 34 erlauben es, den Anteil des Ableitungssignals am Korrektursignal - jeweils getrennt für positive und negative Werte - einzustellen. Die Multiplikationsfaktoren fallen umso höher aus, je größer die vom Vorsteuerdruck beaufschlagte Steuerfläche am Stellglied - dem Kolben des Proportionalventils - ist. Des Weiteren beeinflusst die in Figur 3 gezeigte Kennlinie des Vorsteuerventils 7 die Multiplikationsfaktoren der Multiplikationsglieder 32 und 34. Je stärker die volumenstrombedingte Abweichung von einem Vorgabedruck ausfällt, d.h. je größer die Steigung der Kennlinie 70, 71, 72, 73 ist, desto größer ist der für die Kompensation benötigte Multiplikationsfaktor. Die über den Signalweg 23 und den Signalweg 24 separat einstellbare Verstärkung des Ableitungssignals für positive und negative Werte ermöglicht die Berücksichtigung von asymmetrischen Ventilkennlinien des Vorsteuerventils. Außerdem können dadurch unterschiedliche hydraulischen Widerstände für die unterschiedlichen Bewegungsrichtungen des Stellgliedes berücksichtigt werden.

Der Beitrag des Signalpfades 26 am modifizierten Sollsignal ist über das Multiplikationsglied 44 einstellbar. Auf diese Weise kann die Stärke eines Ansteuerimpulses eingestellt werden, der auf dem Signalpfad 26 erzeugt wird, wenn das Sollsignal den Überdeckungsbereich des Wegeventils 8 überspringt. Durch die Zeitkonstante des PT1-Glieds 42 kann die Dauer des Ansteuerimpulses beeinflusst werden. Diese Parameter werden so eingestellt, dass der Schieber des Wegeventils 8 bei einer von der Ruhelage ausgehenden Betätigung möglichst schnell die Überdeckung überwindet, ein Überschwingen des Schiebers jedoch vermieden wird. Der Multiplikationsfaktor des Multiplikationsglieds 36 bestimmt den Anteil des Sollsignals gegenüber dem Korrektursignal.

Es ist zweckmäßig die Parameter der Steuerelektronik für eine Serie von gleichartigen elektrohydraulischen Steuervorrichtungen im Voraus zu ermitteln und vorab in der Steuerelektronik abzulegen. Die dynamischen Eigenschaften der einzelnen elektrohydraulischen Steuervorrichtung können weiter verbessert werden, indem für die einzelne Steuervorrichtung der Schleppfehler gemessen wird und anhand der Messdaten die Parameter weiter optimiert werden. So können z.B. Fertigungstoleranzen kompensiert werden.

Die in Figur 2 gezeigte Steuerelektronik erlaubt eine noch genauere Kompensation von Schleppfehlern. In dem Kennfeldglied 54 können für beliebig vorgebare Wertepaare aus dem Sollsignal und dem Ableitungssignal Korrekturwerte abgelegt werden. So lässt sich unter anderem die Funktionalität der Signalpfade 22, 23, 24 und 26 in dem Kennfeldglied 54 implementierten. Des Weiteren können Durchfluss-Druck-Kennlinien (vgl. Figur 3) des Druckreduzierventils 7, die bei verschiedenen Sollsignalvorgaben verschiedene Steigungen aufweisen, berücksichtigt werden. Falls das Kennfeldglied 54 mit Daten auf Basis der in Figur 1 gezeigten Signalpfade versehen wird, ist es zweckmäßig, ein entsprechendes Simulationsmodell einer Steuerelektronik in einem Computer zu implementieren und das Verhalten des Druckreduzierventils 7 und des Stellgliedes 8 im Zusammenspiel mit dem Modell der Steuerelektronik durch eine Messung zu bestimmen. Die Parameter des Simulationsmodells lassen sich anhand der Messung bestimmen und ggf. anhand weiterer Messungen optimieren. Danach wird dem Modell ein Satz Eingangsdaten für das Sollsignal und das Ableitungssignal zugeführt und das daraus resultierende Korrektursignal im Kennfeldglied 54 abgelegt. In dem Kennfeldglied 54 können natürlich auch Korrekturparameter hinsichtlich negativer Werte des Sollsignals abgelegt sein. Wie hinsichtlich der Figur 1 für die Steuerelektronik 10 beschrieben, können auf diese Weise mit der Steuerelektronik 50 auch zwei Druckreduzierventile angesteuert werden, die gegenüberliegende Steuerflächen des Stellglieds mit Steuerdruck beaufschlagen.

Die in Figur 1 und in Figur 2 gezeigte Steuerelektronik lässt sich auf einfache Weise in einem Microcontroller implementieren. Dadurch erhält man eine effizient herstellbare und konfigurierbare Steuerelektronik. Diese kann in größeren Stückzahlen produziert und für verschiedene Druckreduzierventile und verschiedene Arten von Stellgliedern konfiguriert werden.

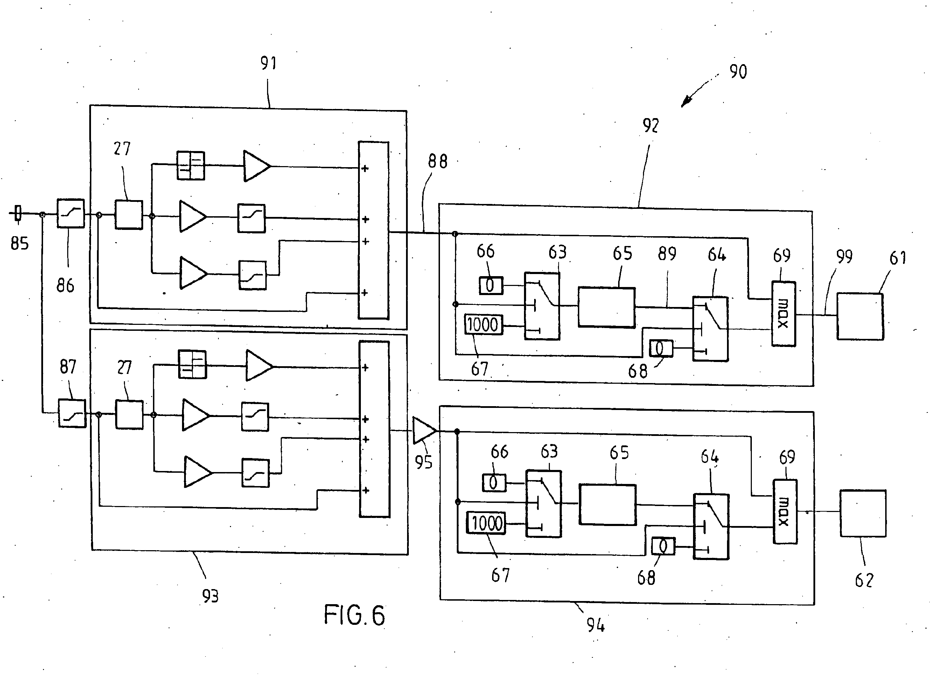

Eine weitere Steuerelektronik zur Verwendung mit der erfindungsgemäßen elektrohydraulischen Steuerung ist in der Figur 6 dargestellt. Der Steuerelektronik 90 ist an der Eingangsschnittstelle 85 das Sollsignal eines Sollwertgebers zugeführt. Begrenzerschaltungen 86 und 87 trennen das Sollsignal in einen positiven und einen negativen Signalanteil. Der positive Signalanteil des Sollsignal wird in einer Kompensationsschaltung 91 und einer Pulsansteuerschaltung 92 modifiziert. Das modifizierte Signal wird der Treiberschaltung 61 eines ersten Druckreduzierventils zugeführt. Der negative Signalanteil wird durch die Kompensationsschaltung 93 und die Pulsansteuerschaltung 94 modifiziert und der Treiberschaltung 62 eines zweiten Druckreduzierventils zugeführt. Zwischen der Kompensationsschaltung 93 und der Pulsansteuerschaltung 94 erfolgt eine Umkehrung des Vorzeichens durch das Multiplikationsglied 95.

Die genannten Druckreduzierventile beaufschlagen gegenüberliegende Steuerflächen eines Ventilkolbens eines Wegeventils, vergleichbar der in Figur 1 gezeigten hydraulischen Anordnung. Durch die getrennte Verarbeitung und Modifikation des negativen und des positiven Signalanteils des Sollsignals können unterschiedliche Kennlinien der zwei Druckreduzierventile berücksichtigt werden.

Die Kompensationsschaltungen 91 und 93 entsprechen der in Figur 1 gezeigten Steuerelektronik mit den Signalpfaden 22, 23, 24 und 25. Ein dem Signalpfad 26 vergleichbarer Signalpfad ist nicht vorhanden. Die Funktion der Erzeugung eines Ansteuerimpulses, der dazu dient den Überdeckungsbereich des Wegeventils möglichst schnell zu überwinden, wird durch die Pulsansteuerschaltung 92 bzw. 94 wahrgenommen. Da die Pulsansteuerschaltungen 92 und 94 gleichartig aufgebaut sind, beschränkt sich die Beschreibung im Folgenden auf die Pulsansteuerschaltung 92.

Das von der Kompensationsschaltungen 91 modifizierte Sollsignal 88 liegt am Steuereingang zweier Schalter 63 und 64 an. Die gezeigte, erste Schaltstellung wird bei einem Steuersignal, das einen Wert ungleich Null aufweist, eingenommen. Die andere, zweite Schaltstellung wird durch ein Steuersignal mit dem Wert Null angesteuert. Der erste Schalter wählt zwischen zwei Vorgabesignalspeichern 66 und 67. In dem Vorgabesignalspeicher 66 ist der Wert 0 abgelegt, in dem Vorgabesignalspeicher 67 eine maximale Pulsamplitude, z.B: 1000. Das Ausgangssignal des Schalters 63 ist einem PT1-Glied 65 zugeführt. Das Ausgangssignal 89 des PT1-Glieds 65 liegt an dem Schalter 64 an, der dieses ausgibt oder den Wert Null aus einem weiteren Vorgabesignalspeicher 68. Eine Maximalwertschaltung 69 gibt den jeweils höheren Wert des Ausgangs des Schalters 64 und des modifizierten Sollsignals 88 als Ausgangssignal 99 aus.

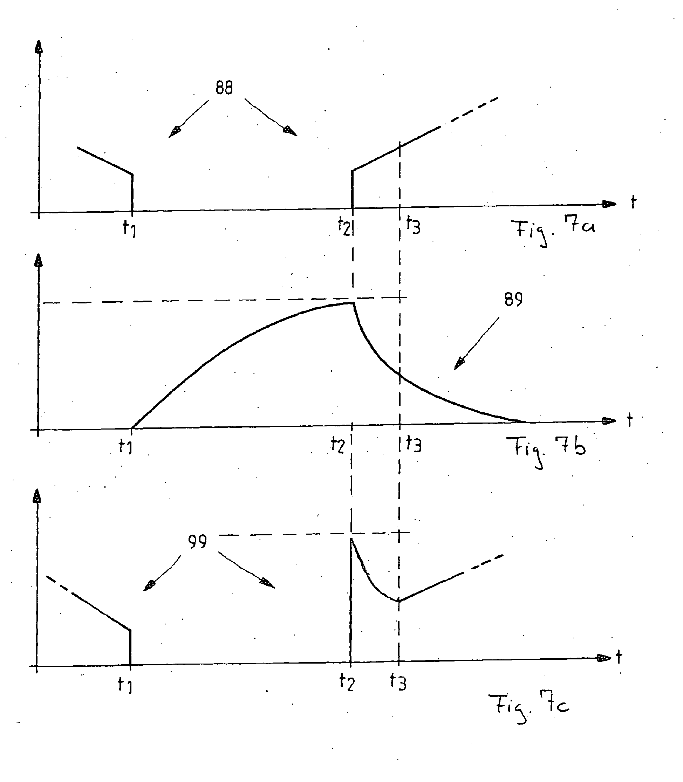

Anhand der Figuren 7a, 7b und 7c wird nun die Funktionsweise der Pulsansteuerschaltung 92 beschrieben. Ein beispielhafter Verlauf des modifizierten Sollsignals 88 ist in der Figur 7c dargestellt. Zwischen den Zeitpunkten t1 und t2 nimmt das Signal 88 auf den Wert Null ein. Dieser Wert entspricht einer Ruhestellung des durch die Treiberschaltung 61 angesteuerten Druckreduzierventils. Zum Zeitpunkt t1 schaltet der Schalter 63 - ausgelöst durch den Abfall des Sollsignals 88 auf den Wert Null - von dem Vorgabesignalspeicher 66 auf den Vorgabesignalspeicher 67. Dadurch wird das PT1-Glied auf die im Vorgabesignalspeicher 67 abgelegte Pulsamplitude aufgeladen. Während dieser Zeit (t1 bis t2) gibt der Schalter 64 den im Vorgabespeicher 68 gespeicherten Wert Null weiter, sperrt also den Ausgang des PT1-Glieds 65.

Das am Ausgang des PT1-Glieds 65 vorliegende Signal 89 ist in Figur 7b gezeigt. Während der Zeit t1 bis t2 nähert sich das Signal 89 asymptotisch der im Speicher 67 abgelegten Pulsamplitude an. Wenn das Sollsignal 88 wieder von Null verschiedene Werte annimmt, also ab dem Zeitpunkt t2, schaltet der Schalter 63 auf den Speicher 66 zurück. Dadurch entlädt sich das PT1-Glied. Gleichzeitig gibt der Schalter 64 den Ausgang des PT1-Glieds 65 frei, so das dieses mit der Maximalwertschaltung 69 verbunden ist.

Die Figur 7c stellt den zeitlichen Verlauf des Ausgangssignals 99 der Pulsansteuerschaltung 92 dar. Die Maximalwertschaltung 69 gibt in dem sich bis t2 erstreckenden Zeitintervall das modifizierte Sollwertsignal 88 weiter. In dem Zeitraum t2 bis t3 liegen an dem Ausgang des Schalters 64 höhere Signalwerte vor, als die Signalwerte des Sollwertsignals 88. Dementsprechend wird das von dem Schalter 64 freigegebene Signal 89 durchgeschaltet. Ab dem Zeitpunkt t3 übersteigen die Signalwerte des Sollwertsignals 88 wieder die Signalwerte des Signals 89 und werden daher von der Maximalwertschaltung 69 ausgegeben.

Bei Einsetzen des Sollsignals 88 zur Zeit t2 wird somit von der Pulsansteuerschaltung 92 ein zusätzlicher Ansteuerimpuls ausgegeben, der bis zum Zeitpunkt t3 andauert. Der Ansteuerimpuls geht zu diesem Zeitpunkt nahtlos in das Sollsignal über.

Durch die Verwendung des PT1-Glieds 65 ist sichergestellt, dass ein Puls ausreichender Dauer erzeugt wird. Des Weiteren lädt sich das PT1-Glied bei einer kurzen Ansteuerpause im Sollsignal 88 nicht bis auf die maximale Pulsamplitude auf, so das ein Ansteuerimpuls geringerer Höhe erzeugt wird. Dadurch kann eine Rücklaufzeit, die der Wegeventilschieber bis zum Erreichen der Ruhestellung benötigt, berücksichtigt werden. Da der Schieber in diesem Fall bei erneuter Betätigung noch nicht in der Ruhestellung angelangt ist, reicht der Ansteuerimpuls geringerer Höhe aus, um den Schieber aus dem Überdeckungsbereich zu verschieben. Ein Überschwingen des Schiebers wird zuverlässig vermieden. Demzufolge ist die Zeitkonstante des PT1-Glieds 65 so angepasst, dass der Aufladevorgang des PT1-Glieds 65 mit einer Rücklaufbewegung des Ventilschiebers in die Ruhestellung korreliert ist.

Die vorliegende Erfindung ist auch zur Steuerung von Verstellpumpen und Hydromotoren mit verstellbaren Schluckvolumen verwendbar. Dies trifft insbesondere auf Verstellpumpen und verstellbare Motoren zu, die einen hydraulisch betätigbaren Stellkolben aufweisen. Anstelle des in Figur 1 dargestellten Wegeventils 8 tritt der Stellkolben der Pumpe oder des Hydromotors. Mittels einer, wie in der Figur 1, Figur 2 oder Figur 6 dargestellten Steuerelektronik - ggf. ohne den fünften Signalpfad 26 bzw. ohne die Pulsansteuerschaltungen 92 und 94 - lassen sich Schleppfehler bei der Pumpenansteuerung reduzieren und das dynamische Ansprechverhalten der Pumpe bzw. des Motors verbessern.

Die in Figur 6 dargestellte Pulsansteuerschaltung 92 kann auch unabhängig von der Kompensationsschaltung 91 eingesetzt werden, um ein möglichst verzögerungsarmes Ansprechen eines Stellglieds aus einer Ruhelage zu erzielen. Liegt ein Stellglied ohne Überdeckung vor, z.B. ein Stellkolben bei Verstellpumpen oder verstellbaren Motoren, kann auch die Kompensationsschaltung 91 alleine eingesetzt werden, um eine dynamische Abweichung zwischen dem Sollsignal und dem tatsächlichen Stellgrad zu verringern.

Anstelle des in Figur 1 dargestellten Signalpfads 22 kann eine Kompensation einer statischen Magnethysterese des Druckreduzierventils auch auf andere Weise bewerkstelligt und in die Ansteuerelektronik integriert werden. Dahingehend wird auf das in der DE 198 13 913 A1 beschriebene Verfahren verwiesen.

Die Treiberschaltung 40 bzw. 61 und 62 für das Druckreduzierventil ist üblicherweise als Stromregler aufgebaut. Darüber hinaus kann in der Treiberschaltung 40 bzw. 61 und 62 auch eine Modulationsschaltung integriert sein, die den Ansteuerstrom für das Druckreduzierventil mit einem periodischen Signal moduliert. Dadurch verringert sich eine reibungsbedingte Hysterese des Druckreduzierventils.

### Bezugszeichenliste

- 1: Elektrohydraulische Steuerungsvorrichtung
- 5: Sollwertvorgabeeinrichtung
- 6: Manueller Sollwertgeber
- 7: Druckreduzierventil
- 8: Wegeventil
- 10: Steuerelektronik
- 12: Elektromagnet
- 14: Ausgang des Druckreduzierventils
- 15: Druckleitung
- 17: Steuerkammer
- 18: Steuerkammer
- 20: Eingangsschnittstelle
- 22: Signalpfad
- 23: Signalpfad
- 24: Signalpfad
- 25: Signalpfad
- 26: Signalpfad
- 27: Differenziationsglied
- 28: Vorzeichenfunktionsglied
- 29: Multiplikationsglied
- 30: Addierglied
- 32: Multiplikationsglied
- 33: Signalbegrenzungsglied
- 34: Multiplikationsglied
- 35: Signalbegrenzungsglied
- 36: Multiplikationsglied
- 40: Treiberschaltung
- 41: Signalbegrenzungsglied
- 42: PT1-Glied
- 43: Differenziationsglied
- 44: Multiplikationsglied
- 50: Steuerelektronik
- 52: Differenziationsglied
- 53: Signalpfad
- 54: Kennfeldglied
- 55: Signalbegrenzungsglied
- 58: Signalpfad
- 60: Addierglied
- 61: Treiberschaltung
- 62: Treiberschaltung
- 63: Schalter
- 64: Schalter
- 65: PT1-Glied
- 66: Vorgabesignalspeicher
- 67: Vorgabesignalspeicher
- 68: Vorgabesignalspeicher
- 69: Maximalwertschaltung
- 70: Kennlinie Druckreduzierventil, Abfluss am Ausgang
- 71: Kennlinie Druckreduzierventil, Zufluss am Ausgang
- 72: Kennlinie Druckreduzierventil, Abfluss am Ausgang
- 73: Kennlinie Druckreduzierventil, Zufluss am Ausgang
- 76: Sollsignal
- 77: elektrischer Ansteuerstrom
- 78: Steuerdruck
- 79: Ventilkolbenposition
- 81: elektrischer Ansteuerstrom
- 82: Steuerdruck
- 83: Ventilkolbenposition
- 85: Eingangsschnittstelle
- 86: Signalbegrenzungsglied
- 87: Signalbegrenzungsglied
- 88: Modifiziertes Sollsignal
- 89: Ausgangssignal des PT1-Glieds
- 90: Steuerelektronik
- 91: Kompensationsschaltung
- 92: Pulsansteuerschaltung
- 93: Kompensationsschaltung
- 94: Pulsansteuerschaltung
- 95: Multiplikationsglied
- 99: Ausgangssignal der Pulsansteuerschaltung

## Patentansprüche

1. Elektrohydraulische Steuervorrichtung, umfassend
ein hydraulisch betätigbares, proportional verstellbares Stellglied (8),
ein elektrisch ansteuerbares Druckreduzierventil (7) mit einem Ausgang, der mit einem Steuerdruckanschluss des Stellglieds (8) fluidisch verbunden ist,
eine Steuerelektronik (10; 50; 90), der an einem Eingang ein Sollsignal zuführbar ist, das einen Stellgrad des Stellglieds (8) vorgibt, und
eine Treiberschaltung (40; 61, 62), die aufgrund eines Eingangssignals ein elektrisches Ansteuersignal für das Druckreduzierventil (7) erzeugt,
wobei die Steuerelektronik (10; 50; 90), die Treiberschaltung (40; 61, 62), das Druckreduzierventil (7) und das Stellglied (8) in Form einer Steuerkette angeordnet sind,
wobei die Steuerelektronik (10; 50; 90) eine Korrekturschaltung (22, 23, 24, 26; 53; 91, 92, 93, 94) für die Erzeugung eines Korrektursignals aufweist, mit welchem das Sollsignal zur Verringerung eines dynamischen Schleppfehlers zwischen dem Sollsignal und einem tatsächlichen Stellgrad modifizierbar ist,
wobei das modifizierte Sollsignal der Treiberschaltung (40; 61, 62) als Eingangssignal zugeführt ist,
wobei die Steuerelektronik (10; 50; 90) so beschaffen ist, dass das Korrektursignal eine zeitliche Änderung des Sollsignals verstärkt,
wobei die Korrekturschaltung eine Differenziationsschaltung (27, 43; 52) aufweist, die eine zeitliche Ableitung des Sollsignals bildet, und
wobei die Korrekturschaltung das Korrektursignal in Abhängigkeit von dem Ableitungssignal und einem vorgegebenen Parameter bildet.

2. Elektrohydraulische Steuervorrichtung nach Anspruch 1, **dadurch gekennzeichnet, dass** die Korrekturschaltung einen ersten Signalweg mit einer Multiplikationseinrichtung, die das Ableitungssignal mit einem vorgegebenen ersten Faktor multipliziert, aufweist.

3. Elektrohydraulische Steuervorrichtung nach Anspruch 1, **dadurch gekennzeichnet, dass** die Korrekturschaltung einen zweiten Signalweg (23) aufweist, auf dem positive Werte des Ableitungssignals mit einem zweiten vorgegebenen Faktor multipliziert werden, und einen dritten Signalweg (24), auf dem negative Werte des Ableitungssignals mit einem dritten vorgegebenden Faktor multipliziert werden.

4. Elektrohydraulische Steuervorrichtung nach einem der Ansprüche 2 oder 3, **dadurch gekennzeichnet, dass** die Korrekturschaltung einen weiteren, vierten (22) Signalweg aufweist, auf dem das Ableitungssignal einer Vorzeichenfunktion und einer nachgeschalteten Multiplikation mit einem vierten vorgegebenen Faktor unterworfen wird.

5. Elektrohydraulische Steuervorrichtung nach Anspruch 3 oder 4, **dadurch gekennzeichnet, dass** eine Additionsvorrichtung (30), die die Signale der einzelnen Signalwege (22, 23, 24) addiert, vorgesehen ist.

6. Elektrohydraulische Steuervorrichtung nach einem der vorhergehenden Ansprüche, **dadurch gekennzeichnet, dass** die Korrekturschaltung (53) das Korrektursignal aus dem Ableitungssignal und dem Sollsignal bilden.

7. Elektrohydraulische Steuervorrichtung nach Anspruch 6, **dadurch gekennzeichnet, dass** die Korrekturschaltung (53) ein Kennfeldglied (54) aufweist, aus dem für vorgegebene Werte des Sollsignals und des Ableitungssignals vorgegebene Korrektursignalwerte auslesbar sind.

8. Elektrohydraulische Steuervorrichtung nach einem der vorhergehenden Ansprüche, **dadurch gekennzeichnet, dass** der Parameter, bzw. der erste Faktor bzw. der zweite und dritte Faktor, bzw. die Daten des Kennfeldglieds (54) von einer Durchfluss-Druck-Kennlinie (70, 71, 72, 73 in Fig. 3) des Druckreduzierventils (7) und/oder einer von dem Steuerdruck beaufschlagten Kolbenfläche am Stellglied (8) abhängig sind.

9. Elektrohydraulische Steuervorrichtung nach einem der vorhergehenden Ansprüche, **dadurch gekennzeichnet, dass** das Druckreduzierventil (7) innerhalb der Steuerkette einen unterlagerten P-Regelkreis darstellt.

10. Elektrohydraulische Steuervorrichtung nach einem der vorhergehenden Ansprüche, **dadurch gekennzeichnet, dass** die Steuerelektronik (10; 50; 90) als Microcontroller realisiert ist.

11. Elektrohydraulische Steuervorrichtung nach einem der Ansprüche 1 bis 10, **dadurch gekennzeichnet, dass** das Stellglied ein Schieber eines Wegeventils (8) ist.

12. Elektrohydraulische Steuervorrichtung nach einem der Ansprüche 1 bis 10, **dadurch gekennzeichnet, dass** das Stellglied ein Stellkolben einer Verstellpumpe, insbesondere einer Flügelzellenpumpe oder einer Axialkolbenpumpe ist.

13. Elektrohydraulische Steuervorrichtung nach einem der Ansprüche 1 bis 10, **dadurch gekennzeichnet, dass** das Stellglied ein Stellkolben eines Hydraulikmotors mit verstellbaren Schluckvolumen ist.

14. Elektrohydraulische Steuervorrichtung nach Anspruch 11, **dadurch gekennzeichnet, dass** die Korrekturschaltung einen weiteren, fünften Signalweg (26) aufweist, auf dem das Sollsignal durch eine Begrenzerschaltung (41) auf Signalamplituden, die einer Betätigung des Wegeventils (8) innerhalb eines Überdeckungsbereichs entsprechen, begrenzt wird und auf dem das derart begrenzte Sollsignal einer Reihenschaltung aus einem Verzögerungsglied (42) - insbesondere einem PT1-Glied -, einer zweiten Differenziationsschaltung (43) und einer Multiplikationsschaltung (44) zugeführt wird.

15. Elektrohydraulische Steuervorrichtung nach Anspruch 11, **dadurch gekennzeichnet, dass** die Steuerelektronik (90) eine Pulsansteuerschaltung (92, 94) umfasst, der das Sollsignal oder das modifizierte Sollsignal (88) zugeführt ist, die bei einem Wechsel des Sollsignals von einer ersten Amplitude, die einer unbetätigten Ruhestellung des Druckreduzierventils (7) entspricht, zu einer anderen, zweiten Amplitude, die einer Betätigungsstellung des Druckreduzierventils (7) entspricht, einen Ansteuerimpuls (89) zur schnellen Überwindung eines Überdeckungsbereiches des Wegeventils (8) erzeugt und die das Sollsignal oder das modifizierte Sollsignal (88) durch Aufschalten des Ansteuerimpulses (89) modifiziert.

16. Elektrohydraulische Steuervorrichtung nach Anspruch 15, **dadurch gekennzeichnet, dass** die Pulsansteuerschaltung ein Verzögerungsglied (65) - insbesondere ein PT1-Glied - umfasst, dessen Ausgangssignal den Ansteuerimpuls (89) vorgibt.

17. Elektrohydraulische Steuervorrichtung nach Anspruch 16, **dadurch gekennzeichnet, dass** die Pulsansteuerschaltung (92, 94) ein erstes Schaltelement (63) umfasst, das dem Verzögerungsglied (65) eine vorgegebenen maximale Pulsamplitude zuführt während das Sollsignal die erste Amplitude aufweist, und dass ein zweites Schaltelement (64) vorgesehen ist, das bei dem Wechsel des Sollsignals von der ersten auf die zweite Amplitude das Ausgangssignal des Verzögerungsglieds (65) freigibt.

18. Elektrohydraulische Steuervorrichtung nach Anspruch 17, **dadurch gekennzeichnet, dass** die Pulsansteuerschaltung (92, 94) eine Maximalwertschaltung (69) umfasst, der zum Einen das Ausgangssignal des Verzögerungsglieds (65) und zum Anderen das Sollsignal oder das modifizierte Sollsignal (88) zugeführt ist.

## Claims

1. Electrohydraulic control apparatus comprising
a hydraulically actuatable, proportionally adjustable actuator (8),
an electrically drivable pressure-reducing valve (7) having an output which is fluidically connected to a control pressure connection of the actuator (8),
control electronics (10; 50; 90), one input of which can be supplied with a desired signal which predefines a degree of actuation of the actuator (8), and
a driver circuit (40; 61, 62) which generates an electrical drive signal for the pressure-reducing valve (7) on the basis of an input signal,
the control electronics (10; 50; 90), the driver circuit (40; 61, 62), the pressure-reducing valve (7) and the actuator (8) being arranged in the form of a control chain,
the control electronics (10; 50; 90) having a correction circuit (22, 23, 24, 26; 53; 91, 92, 93, 94) for generating a correction signal which can be used to modify the desired signal in order to reduce a dynamic lag error between the desired signal and an actual degree of actuation,
the modified desired signal being supplied to the driver circuit (40; 61, 62) as an input signal,
the control electronics (10; 50; 90) being such that the correction signal amplifies a temporal change in the desired signal,
the correction circuit having a differentiation circuit (27, 43; 52) which forms a time derivative of the desired signal, and
the correction circuit forming the correction signal on the basis of the derivative signal and a predefined parameter.

2. Electrohydraulic control apparatus according to Claim 1, **characterized in that** the correction circuit has a first signal path having a multiplication device which multiplies the derivative signal by a predefined first factor.

3. Electrohydraulic control apparatus according to Claim 1, **characterized in that** the correction circuit has a second signal path (23), on which positive values of the derivative signal are multiplied by a second predefined factor, and a third signal path (24) on which negative values of the derivative signal are multiplied by a third predefined factor.

4. Electrohydraulic control apparatus according to either of Claims 2 and 3, **characterized in that** the correction circuit has a further, fourth signal path (22) on which the derivative signal is subjected to a sign function and to a downstream multiplication by a fourth predefined factor.

5. Electrohydraulic control apparatus according to Claim 3 or 4, **characterized in that** an addition apparatus (30), which adds the signals from the individual signal paths (22, 23, 24), is provided.

6. Electrohydraulic control apparatus according to one of the preceding claims, **characterized in that** the correction circuit (53) forms the correction signal from the derivative signal and the desired signal.

7. Electrohydraulic control apparatus according to Claim 6, **characterized in that** the correction circuit (53) has a characteristics element (54) from which correction signal values predefined for predefined values of the desired signal and of the derivative signal can be read.

8. Electrohydraulic control apparatus according to one of the preceding claims, **characterized in that** the parameter and the first factor and the second and third factors and the data from the characteristics element (54) are dependent on a flow/pressure characteristic curve (70, 71, 72, 73 in Fig. 3) of the pressure-reducing valve (7) and/or of a piston surface to which the control pressure is applied on the actuator (8).

9. Electrohydraulic control apparatus according to one of the preceding claims, **characterized in that** the pressure-reducing valve (7) inside the control chain is a subordinate P control loop.

10. Electrohydraulic control apparatus according to one of the preceding claims, **characterized in that** the control electronics (10; 50; 90) are in the form of a microcontroller.

11. Electrohydraulic control apparatus according to one of Claims 1 to 10, **characterized in that** the actuator is a slide of a directional control valve (8).

12. Electrohydraulic control apparatus according to one of Claims 1 to 10, **characterized in that** the actuator is an actuating piston of a variable displacement pump, in particular of a vane-cell pump or an axial piston pump.

13. Electrohydraulic control apparatus according to one of Claims 1 to 10, **characterized in that** the actuator is an actuating piston of a hydraulic motor with an adjustable absorption volume.

14. Electrohydraulic control apparatus according to Claim 11, **characterized in that** the correction circuit has a further, fifth signal path (26) on which the desired signal is limited, by a limiter circuit (41), to signal amplitudes which correspond to actuation of the directional control valve (8) within a coverage range and on which the desired signal limited in this manner is supplied to a series circuit comprising a delay element (42), in particular a PT1 element, a second differentiation circuit (43) and a multiplication circuit (44).

15. Electrohydraulic control apparatus according to Claim 11, **characterized in that** the control electronics (90) comprise a pulse drive circuit (92, 94) which is supplied with the desired signal or the modified desired signal (88), generates a drive pulse (89) for rapidly overcoming a coverage range of the directional control valve (8) in the event of the desired signal changing from a first amplitude, which corresponds to a non-actuated rest position of the pressure-reducing valve (7), to another, second amplitude, which corresponds to an actuation position of the pressure-reducing valve (7), and modifies the desired signal or the modified desired signal (88) by applying the drive pulse (89).

16. Electrohydraulic control apparatus according to Claim 15, **characterized in that** the pulse drive circuit comprises a delay element (65), in particular a PT1 element, the output signal of which predefines the drive pulse (89).

17. Electrohydraulic control apparatus according to Claim 16, **characterized in that** the pulse drive circuit (92, 94) comprises a first switching element (63) which supplies a predefined maximum pulse amplitude to the delay element (65) while the desired signal has the first amplitude, and **in that** a second switching element (64) is provided and enables the output signal from the delay element (65) in the event of the desired signal changing from the first amplitude to the second amplitude.

18. Electrohydraulic control apparatus according to Claim 17, **characterized in that** the pulse drive circuit (92, 94) comprises a maximum value circuit (69) which is supplied with the output signal from the delay element (65), on the one hand, and with the desired signal or the modified desired signal (88), on the other hand.

## Revendications

1. Dispositif de commande électro-hydraulique comprenant
un actionneur (8) à actionnement hydraulique à positionnement proportionnel,
un réducteur de pression (7) à commande électrique, muni d'une sortie qui est en liaison fluidique avec un raccord de pression de commande de l'actionneur (8),
une électronique de commande (10 ; 50 ; 90) à une entrée de laquelle peut être acheminé un signal de consigne qui prédéfinit un degré de réglage de l'actionneur (8) et
un circuit d'attaque (40 ; 61, 62) qui, sur la base d'un signal d'entrée, génère un signal de commande électrique pour le réducteur de pression (7),
l'électronique de commande (10 ; 50 ; 90), le circuit d'attaque (40 ; 61, 62), le réducteur de pression (7) et l'actionneur (8) étant disposés sous la forme d'une chaîne de commande,
l'électronique de commande (10 ; 50 ; 90) présentant un circuit de correction (22, 23, 24, 26 ; 53 ; 91, 92, 93, 94) pour la génération d'un signal de correction, avec lequel le signal de consigne peut être modifié en vue de réduire une erreur de poursuite dynamique entre le signal de consigne et un degré de réglage effectif,
le signal de consigne modifié étant acheminé au circuit d'attaque (40 ; 61, 62) en tant que signal d'entrée,
l'électronique de commande (10 ; 50 ; 90) étant réalisée de telle sorte que le signal de correction amplifie une modification dans le temps du signal de consigne,
le circuit de correction présentant un circuit de différenciation (27, 43 ; 52) qui forme une dérivée dans le temps du signal de consigne, et
le circuit de correction formant le signal de correction en fonction du signal dérivée et d'un paramètre prédéfini.

2. Dispositif de commande électro-hydraulique selon la revendication 1, **caractérisé en ce que** le circuit de correction présente un premier trajet de signal muni d'un dispositif de multiplication qui multiplie le signal dérivé par un premier facteur prédéfini.

3. Dispositif de commande électro-hydraulique selon la revendication 1, **caractérisé en ce que** le circuit de correction présente un deuxième trajet de signal (23) sur lequel les valeurs positives du signal dérivé sont multipliées par un deuxième facteur prédéfini, et un troisième trajet de signal (24) sur lequel les valeurs négatives du signal dérivé sont multipliées par un troisième facteur prédéfini.

4. Dispositif de commande électro-hydraulique selon l'une des revendications 2 ou 3, **caractérisé en ce que** le circuit de correction présente un autre, quatrième trajet de signal (22) sur lequel le signal dérivé est soumis à une fonction de signe et ensuite à une multiplication avec un quatrième facteur prédéfini.

5. Dispositif de commande électro-hydraulique selon la revendication 3 ou 4, **caractérisé en ce qu'**il est prévu un dispositif d'addition (30) qui additionne les signaux des trajets de signal individuels (22, 23, 24).

6. Dispositif de commande électro-hydraulique selon l'une des revendications précédentes, **caractérisé en ce que** le circuit de correction (53) forme le signal de correction à partir du signal dérivé et du signal de consigne.

7. Dispositif de commande électro-hydraulique selon la revendication 6, **caractérisé en ce que** le circuit de correction (53) présente un élément à diagramme caractéristique (54) à partir duquel peuvent être lues des valeurs du signal de correction prédéfinies pour des valeurs prédéfinies du signal de consigne et du signal dérivé.

8. Dispositif de commande électro-hydraulique selon l'une des revendications précédentes, **caractérisé en ce que** le paramètre ou le premier facteur ou le deuxième et le troisième facteur ou encore les données de l'élément à diagramme caractéristique (54) sont dépendants d'une courbe caractéristique débit/pression (70, 71, 72, 73 dans la Figure 3) du réducteur de pression (7) et/ou d'une surface de piston soumise à la pression de commande sur l'actionneur (8).

9. Dispositif de commande électro-hydraulique selon l'une des revendications précédentes, **caractérisé en ce que** le réducteur de pression (7) représente à l'intérieur de la chaîne de commande un circuit de régulation P sous-jacent.

10. Dispositif de commande électro-hydraulique selon l'une des revendications précédentes, **caractérisé en ce que** l'électronique de commande (10 ; 50 ; 90) est réalisée sous la forme d'un microcontrôleur.

11. Dispositif de commande électro-hydraulique selon l'une des revendications 1 à 10, **caractérisé en ce que** l'actionneur est un coulisseau d'une vanne de distribution (8).

12. Dispositif de commande électro-hydraulique selon l'une des revendications 1 à 10, **caractérisé en ce que** l'actionneur est un piston de réglage d'une pompe à cylindrée variable, notamment d'une pompe à cellules semi-rotative ou d'une pompe à piston axial.

13. Dispositif de commande électro-hydraulique selon l'une des revendications 1 à 10, **caractérisé en ce que** l'actionneur est un piston de réglage d'un moteur hydraulique à volume d'absorption réglable.

14. Dispositif de commande électro-hydraulique selon la revendication 11, **caractérisé en ce que** le circuit de correction présente un autre, cinquième trajet de signal (26) sur lequel le signal de consigne est limité par un circuit limiteur (41) aux amplitudes de signal qui correspondent à un actionnement de la vanne de distribution (8) au sein d'une plage de couverture et sur lequel le signal de consigne ainsi limité est acheminé à un circuit série composé d'un élément de retard (42), notamment un élément PT1, d'un circuit de différenciation (43) et d'un circuit de multiplication (44).

15. Dispositif de commande électro-hydraulique selon la revendication 11, **caractérisé en ce que** l'électronique de commande (90) comprend un circuit de commande par impulsions (92, 94) auquel est acheminé le signal de consigne ou le signal de consigne modifié (88), lequel, lors d'un changement du signal de consigne d'une première amplitude, qui correspond à une position de repos non actionnée du réducteur de pression (7), à une autre, deuxième amplitude, qui correspond à une position actionnée du réducteur de pression (7), génère une impulsion de commande (89) destinée à contourner la plage de couverture de la vanne de distribution (8) et lequel modifie le signal de consigne ou le signal de consigne modifié (88) par superposition de l'impulsion de commande (89).

16. Dispositif de commande électro-hydraulique selon la revendication 15, **caractérisé en ce que** le circuit de commande par impulsions comprend un élément de retard (65), notamment un élément PT1, dont le signal de sortie prédéfinit l'impulsion de commande (89).

17. Dispositif de commande électro-hydraulique selon la revendication 16, **caractérisé en ce que** le circuit de commande par impulsions (92, 94) comprend un premier élément de commutation (63) qui achemine à l'élément de retard (65) une amplitude d'impulsion prédéfinie maximale pendant que le signal de consigne présente la première amplitude, et **en ce qu'**il est prévu un deuxième élément de commutation (64) qui libère le signal de sortie de l'élément de retard (65) lors du changement du signal de consigne de la première à la deuxième amplitude.

18. Dispositif de commande électro-hydraulique selon la revendication 17, **caractérisé en ce que** le circuit de commande par impulsions (92, 94) comprend un circuit à valeur maximale (69) auquel est acheminé d'une part le signal de sortie de l'élément de retard (65) et d'autre part le signal de consigne ou le signal de consigne modifié (88).
